# DEMANDE DE BREVET EUROPEEN

(11) **EP 1 298 776 A1**
(43) Date de publication de la demande: **02.04.2003**
(21) Numéro de dépôt: 02405813.3
(22) Date de dépôt: 24.09.2002
(51) Int. Cl.: H02K 26/00, H01F 7/14

(54) **Actuateur rotatif**

(30) Priorité: 01.10.2001 CH 18032001
(71) Demandeur: myonic AG, 2504 Biel (CH)
(72) Inventeur: Bourquard, Claude, 3208 Gurbrü (CH); Jauvtis, Louis, Lexington, Mass. 02420 (US)
(74) Mandataire: Liebetanz, Michael, Dipl.-Phys.

(57) **Abrégé**

L'invention concerne un actuateur rotatif avec un bras d'actuateur (2), lequel bras (2) comporte un dispositif rotatif (4) autour d'un axe (3) disposé perpendiculaire au dit bras (2). Un aimant permanent (5) est fixé au bras (2) et disposé d'une façon que les pôles nord (N) et sud (S) et ledit bras (2) soient disposés dans un plan qui est perpendiculaire au dit axe (3). De plus l'actuateur comporte au moins un élément magnétique (6, 7) auprès de cet axe (3) dans ledit plan comportant au moins une bobine (6, 7) et au moins une butée (8) de précontrainte. Le bras (2) s'appuie contre la butée, quand aucun ou un premier courant est injecté dans les bobines (6, 7). Quand une deuxième butée (9) est prévue, contre laquelle le bras (2) s'appuie, quand un second courant est injecté dans les bobines (6, 7), on obtient un actuateur monostable à longue durée de vie.

## Description

L'invention concerne un actuateur rotatif
- avec un bras d'actuateur,
- lequel bras comporte un dispositif rotatif autour d'un axe disposé perpendiculairement audit bras,
- avec un aimant permanent,
- avec au moins un élément magnétique auprès de cet axe dans ledit plan comportant au moins une bobine.

Il est connu dans les applications diverses actuelles de mouvement rotatif non continu, que ce soit un mouvement alternatif ou un mouvement d'actuation monostable, l'utilisation de ressorts mécaniques pour le rappel du rotor de l'actuateur.

La demande de brevet WO 97/17698 montre un actuateur rotatif utilisant un dispositif avec les caractéristiques suivant le préambule de la revendication 1. Le but de l'actuateur connu est de réduire le poids du bras d'actuateur par disposition de l'aimant permanent entre deux bobines, formant ainsi le stator, et de fermer le circuit magnétique par des tiges supplémentaires prévues sur le bras d'actuateur. Ceci ne permet pas de trouver un point stable sans injection de courant dans les bobines et ne fournit donc pas un actuateur monostable.

L'objet de l'invention est donc de proposer un actuateur amélioré qui donne un actuateur monostable, qui est facile à contrôler, qui possède une très grande durée de vie et qui est peu coûteux.

L'invention consiste à remplacer le ressort mécanique par un rappel magnétique par la création d'une dissymétrie dans le flux magnétique d'un moteur à rotor à aimant permanent. Le dispositif d'actuateur rotatif permet le rappel dans une position particulière du rotor d'un moteur électrique à aimant permanent.

La dissymétrie peut être créée soit par l'adjonction d'une pièce ferro-magnétique soit par la modification de la forme (circularité) du stator pour en diminuer localement l'entrefer.

L'effet de la dissymétrie est de créer deux positions préférentielles stables du rotor situées à 180° l'une de l'autre. Pour des applications particulières, il est possible de créer plus de positions préférentielles en créant plus de lieux de dissymétrie.

L'actuateur rotatif tel que défini dans la revendication 1, rend superflu un nombre important de composants mécaniques et il est facile à monter.

Il est bien évident que l'invention est utilisable dans bien des domaines mais particulièrement quand la grandeur de l'actuateur est de l'ordre de quelques millimètres. Un des intérêts est le fait qu'aucune fatigue du ressort ne peut se produire.

L'invention sera décrite plus amplement en référence aux dessins, qui représentent:
- Fig. 1: une vue schématique de dessus et partiellement coupée sur un actuateur suivant l'invention, et
- Fig. 2: une vue en perspective de l'actuateur suivant l'invention.

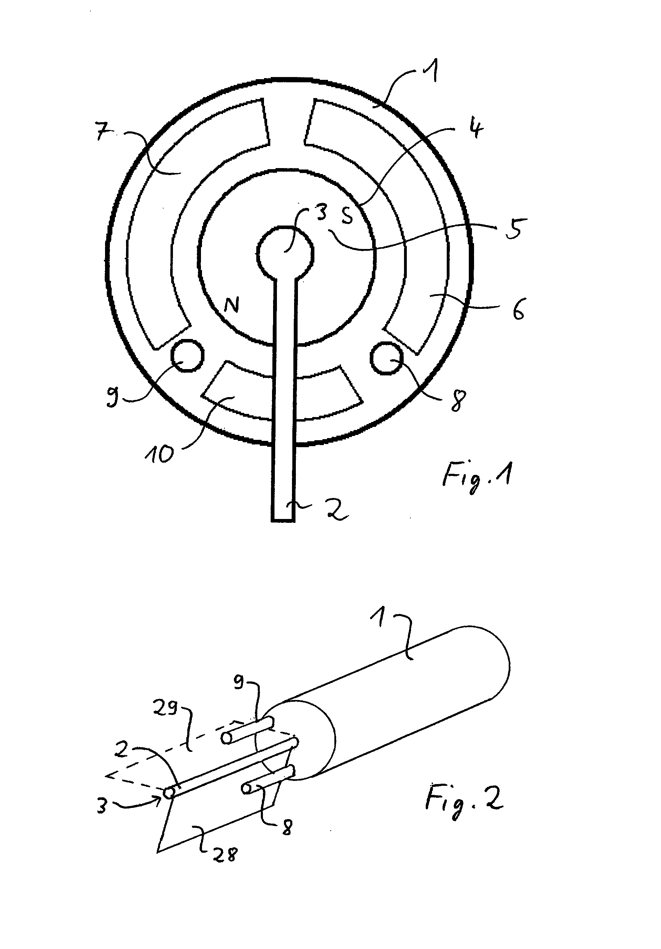

La Fig. 2 montre une vue schématique de dessus et partiellement coupée sur un actuateur suivant l'invention. L'actuateur comporte un casier ou une base qui est référencé par le chiffre 1.

Le bras 2 de l'actuateur est monté pour un mouvement rotatif autour d'un axe 3. L'axe 3 s'étend perpendiculairement par rapport au plan du dessin. Le bras 2 est monté sur un élément 4 qui peut tourner autour de l'axe 3. L'élément qui peut être qualifié d'être une partie du rotor 4 comporte un aimant permanent 5, qui comporte les pôles Nord et Sud aux endroits avec les lettres correspondantes N et S.

Autour de ces éléments centraux, l'actuateur comporte deux bobines 6 et 7. Dans le mode de réalisation décrit, les bobines 6 et 7 couvrent un peu moins que 120 degrés de la circonférence à l'intérieur du casier 1. Aux bouts des bobines 6 et 7 sont disposées deux butées 8 et 9 dont la fonction sera plus claire dans la Fig. 2.

Les bobines 6 et 7 sont disposées symétriquement par rapport au bras 2 quand celui ci est positionné au milieu entre les butées 8 et 9. Dans cette position qui est montrée dans la Fig. 1, le pôle Nord est prévu en face de la butée 9. Il est clair que cela peut également être l'autre pôle (c.a.d. Sud) ou l'autre butée (c.à.d. 8).

Entre les butées 8 et 9 où se trouve dans un moteur rotatif conventionnel la troisième bobine, cette-dernière à été remplacée par une pièce ferromagnétique 10. Cette pièce ferromagnétique 10 peut être en fer doux.

La butée 8 crée une légère précontrainte pour garantir une position stable du rotor 4, et donc du bras 2, en position de repos sans courant dans les bobines 6 et 7.

La Fig. 2 montre une vue en perspective de l'actuateur rotatif suivant l'invention. Des éléments identiques portent dans tous les dessins les mêmes références.

Le fonctionnement de l'actuateur lors de l'actuation est comme suit: Le courant approprié est injecté dans les bobines 6 et 7 ce qui a pour effet de créer un flux magnétique qui va induire un couple électromagnétique dans le rotor 4. Celui-ci étant plus grand que le couple de rappel dû à la pièce ferromagnétique 10, le rotor 4 va donc tourner jusqu'à atteindre la butée 9. Le rotor 4 restera sur la butée 9 jusqu'à relâchement du courant dans les bobines 6 et 7. Cette position est montrée avec une partie du bras 2 qui porte la référence 28.

Le Rappel fonctionne ainsi: Le courant est relâché dans les bobine 6 et 7 supprimant le couple électromagnétique appliqué sur le rotor 4. Seul le couple de rappel subsistant, le rotor 4 va donc tourner dans l'autre sens jusqu'à atteindre la butée 8, butée 8 qu'il ne va plus quitter jusqu'à nouvelle application du cycle d'actuation. Cette position est montrée avec une partie du bras 2 dessiné en pointillé et qui porte la référence 29.

La dissymétrie de l'actuateur peut être créée soit par l'adjonction d'une pièce ferro-magnétique 10, comme décrite dans le mode de réalisation des figures, soit par la modification de la forme (circularité) du stator pour en diminuer localement l'entrefer. Ceci est par exemple possible par un changement des angles et/ou de la forme des bobines 6 et 7.

L'effet de la dissymétrie est de créer deux positions préférentielles stables (28 et 29) du rotor 4 situées à 180 degrés l'une de l'autre. Pour des raisons de stabilité les butées 8 et 9 sont prévues dans un angle ici de 90 degrés qui peut être élargi jusqu'à de 150 à 170 degrés. Pour des applications particulières, il est possible de créer plus de positions préférentielles en créant plus de lieux de dissymétrie.

Un autre mode de réalisation n'est pas montré dans les dessins, mais le même système peut aussi fonctionner comme un oscillateur. Un tel oscillateur peut être obtenu si l'on prend un actuateur suivant les Fig. 1 ou 2 en omettant les butées 8 et 9.

Dans un tel système sans butées, l'actuateur va osciller autour du point d'équilibre donné par la pièce polaire, qui crée une position préférentielle, ou de la dissymétrie. Cette oscillation peut être entretenue par l'utilisation d'un courant alternatif sur les deux autres bobines en créant par ce moyen un oscillateur.

## Revendications

1. Actuateur rotatif
- avec un bras d'actuateur (2),
- lequel bras (2) comporte un dispositif rotatif (4) autour d'un axe (3) disposé perpendiculairement au dit bras (2),
- avec un aimant permanent (5),
- avec au moins un élément magnétique (6, 7) auprès de cet axe (3) dans ledit plan comportant au moins une bobine (6, 7), , **charactérisé en ce que** ledit aimant permanent (5) est disposé d'une façon que les pôles nord (N) et sud (S) et ledit bras (2) soient disposés dans un plan qui est perpendiculaire au dit axe (3) et en ce que ledit aimant permanent (5) est fixé au bras (2).

2. Actuateur selon la revendication 1, **caractérisé en ce qu'**il comporte deux bobines (6, 7), qui créent et maintiennent une oscillation du bras (2) autour d'un point-équilibre par un courant alternatif traversant les deux bobines (6, 7).

3. Actuateur selon la revendication 1, **caractérisé en ce que** l'actuateur comporte au moins une butée (8) de précontrainte, contre laquelle le bras (2) s'appuie (28), quand aucun ou un premier courant est injecté dans la ou les bobines (6, 7).

4. Actuateur selon la revendication 3, **caractérisé en ce qu'**il comporte une deuxième butée (9) contre laquelle le bras (2) s'appuie (29), quand un second courant est injecté dans la ou les bobines (6, 7).

5. Actuateur selon la revendication 3, **caractérisé en ce que** un élément (10) de dissymétrie du flux magnétique est prévu entre les butées (8 et 9).

6. Actuateur selon la revendication 2, **caractérisé en ce que** deux bobines (6 et 7) au moins sont prévues qui forment un élément de dissymétrie du flux magnétique par leur forme non-circulaire pour en diminuer localement l'entrefer.
